# EUROPEAN PATENT APPLICATION

(11) **EP 2 461 230 A2**
(43) Date of publication of application: **06.06.2012**
(21) Application number: 11000609.5
(22) Date of filing: 26.01.2011
(51) Int. Cl.: G06F 3/033

(54) **Light pen**

(30) Priority: 02.12.2010 TW 99104756
(71) Applicant: BenQ Corporation, Taipei 114 (TW)
(72) Inventor: Chen, Wei-Chieh, Taoyuan County 328 (TW); Chiang, Yung-Yu, Xindian City Taipei County 231 (TW)
(74) Representative: Brandenburger, Karin

(57) **Abstract**

A light pen. The light pen includes a housing, a base, a nib structure, a switch and a light sensor. The base is movably or deformably connected to the housing. The base has a peripheral portion and a through hole substantially surrounded by the peripheral portion. The nib structure Is disposed on the base. The switch is disposed between the base and the housing. The light sensor is disposed In the housing for receiving a light signal transmitted along a light-receiving path into the housing. The light-receiving path is extended through the first through hole. Wherein, when no force is applied on the nib structure, the base Is away from the switch without triggering the switch; and when a force is applied on the nib structure, the base is moved or deformed to contact the switch, so that the switch is triggered.

## Description

This application claims the benefit of Taiwan application Serial No. 099104756, filed Feb. 12, 2010, the subject matter of which is incorporated herein by reference.

### BACKGROUND OF THE INVENTION

### Field of the Invention

The invention relates in general to a light pen, and more particularly to a light pen that can write or draw on a projection screen.

### Description of the Related Art

The projector, having the advantages of big screen and small volume and having greatly improved the brightness and the resolution level, has become more and more popular in the application such as office briefing and home theater.

During the process of briefing, the user normally needs to make some notes on the projection slide, and the most commonly used method is to make the notes on the computer through the mouse or the keyboard. However, such method will change the content of the projection slide, and the notes are limited to the function of the briefing software. For example, when the briefing software is switched to the "play" mode, the editing function is not valid. In the case that the editing function is valid, the user still cannot freely write or draw on the projection slide or erase the notes or marks.

### SUMMARY OF THE INVENTION

The invention is directed to a light pen. Through a variety of mechanism designs, when the user holds the light pen and presses the nib structure on the projection screen, the light pen is Immediately activated for receiving a light signal from the projector. Then, the position of the projection screen pointed by the up of the nib structure is measured, and the user can write with the light pen freely. Furthermore, the structural design of the light pen Is combined with various optical designs so that the light sensor has higher precision in the measurement of position.

According to a first aspect of the present invention, a light pen is provided. The light pen includes a housing, a base, a nib structure, a switch and a light sensor. The base is movably or deformably connected to the housing. The base has a peripheral portion and a through hole substantially surrounded by the peripheral portion. The nib structure is disposed on the base. The switch Is disposed between the base and the housing. The light sensor is disposed in the housing for receiving a light signal transmitted along a light-receiving path into the housing. The light-receiving path is extended through the first through hole. Wherein, when no force is applied on the nib structure, the base is away from the switch without triggering the switch; and when a force is applied on the nib structure, the base is moved or deformed to contact the switch, so that the switch is triggered,

The Invention will become apparent from the following detailed description of the preferred but non-limiting embodiments. The following description is made with reference to the accompanying drawings.

### BRIEF DESCRIPTION OF THE DRAWINGS

FIG. 1 shows a 3-D diagram of a light pen according to a first embodiment of the invention;

FIG. 2 shows a side view of the light pen of FIG 1 towards the X-axial negative direction;

FIG 3 shows an explosion diagram of the light pen of FIG 1;

FIG. 4 shows a partial cross-sectional view of the light pen of FIG 2 along a cross-sectional line 4-4';

FIG. 5 shows a partial cross-sectional view of the light pen of FIG. 2 along a cross-sectional line 5-5';

FIG 6 shows a cross-sectional view of the light pen of FIG. 4 along a cross-sectional line 6-6'; and

FIG 7 shows a cross-sectional view of a light pen according to a second embodiment of the Invention.

### DETAILED DESCRIPTION OF THE INVENTION

A number of preferred embodiments are disclosed below for elaborating the details of the invention. However, the invention is not limited to the embodiments, and the embodiments are for elaborating the invention not for limiting the scope of protection of the invention. Moreover, secondary elements are omitted in the embodiments to highlight the characteristics of the invention.

First Embodiment

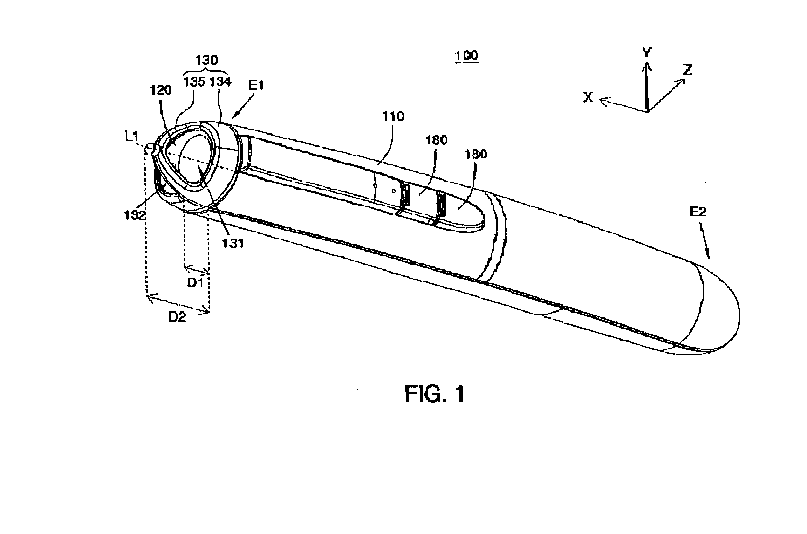

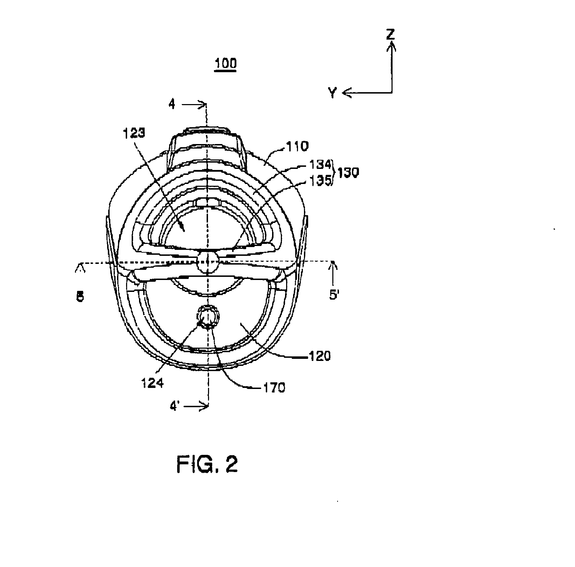

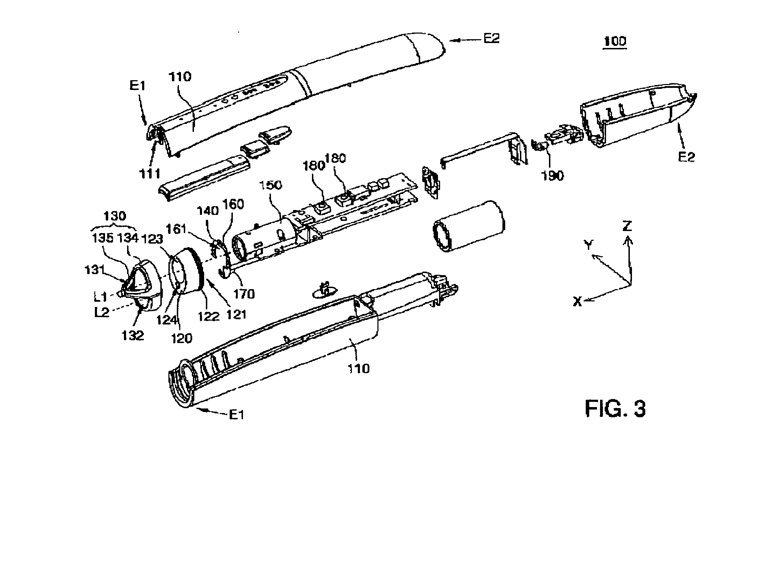

Referring to FIGS. 1 to 3. FIG. 1 shows a 3-D diagram of a light pen 100 according to a first embodiment of the invention. FIG 2 shows a side view of the light pen 100 of FIG 1 towards the X-axial negative direction. FIG 3 shows an explosion diagram of the light pen 100 of FIG 1. The light pen 100 includes a housing 110, a base 120, a nib structure 130, four switches 140, a light sensor 150, an arc-shaped circuit board 160, a laser pointer 170, a plurality of buttons 180 and an Infra-red emitter 190. The switch 140, the light sensor 150. the arc-shaped circuit board 160 and the infra-red emitter 190 are illustrated In FIG. 3, and the laser pointer 170 Is illustrated in FIGS. 2 to 4. As Indicated in FIG, 3, the base 120 can be deformably connected to the first end E1 of the housing 110. The base 120 has a peripheral portion 121 and a first through hole 123 substantially surrounded by the peripheral portion 121, The nib structure 130 is disposed on the base 120. The switches 140 are disposed between the base 120 and the housing 110. When no force is applied on the nib structure 130, the base 120 is away from the switches 140 without triggering the switches 140. When a force is applied on the nib structure 130, the base 120 is moved or deformed to contact at least one of the switches 140, so that one of the switches 140 is triggered. Thus, the user can hold the light pen 100 and press the nib structure 130 on the projection screen for activating the light pen 100 instantly.

Referring to FIG. 3, the light pen 100 includes four switches 140 disposed between the base 120 and the housing 110, and symmetrically disposed around the light-receiving path L1 of the light sensor 150. The switches 140 are disposed on the arc-shaped circuit board 160, and the arc-shaped circuit board 160 is disposed between the base 120 and the housing 110. Thus, when a force is applied on the nib structure 130, the base 120 can press one of the switches 140 no matter towards which direction is the base 120 deformed, In other embodiments, the light pen 100 may include one, two, three, four or more than four switches 140, and any design of the light pen 100 enabling the base 120 to press one of the switches 140 when a force is applied on the nib structure 130 is within the scope of protection of the invention.

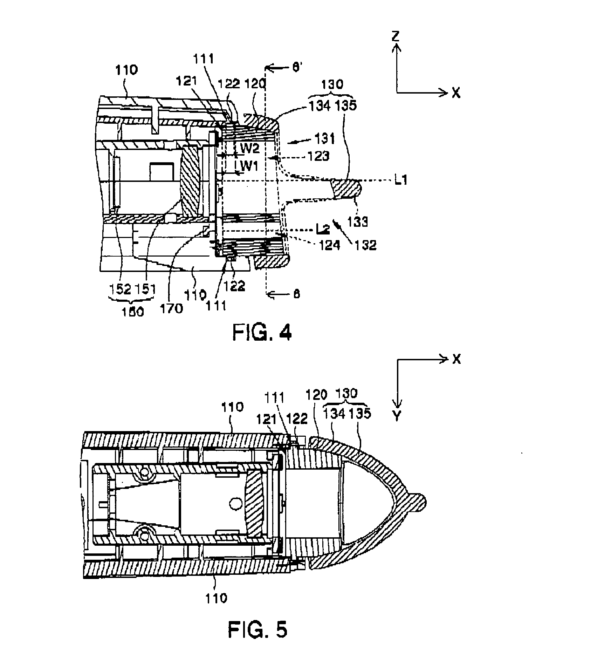

Referring to FIGS. 4 to 5. FIG 4 shows a partial cross-sectional view of the light pen 100 of FIG. 2 along a cross-sectional line 4-4'. FIG. 5 shows a partial cross-sectional view of the light pen 100 of FIG 2 along a cross-sectional line 5-5'. The housing 110 has a first engaging portion 111, and the base 120 has a second engaging portion 122, wherein the base 120 is connected to the housing 110 through the first engaging portion 111 and the second engaging portion 122. The first engaging portion 111 and the second engaging portion 122 can be assembled by different means. Let FIG. 3 be taken for example. In the present embodiment of the invention, the first engaging portion 111 is a circular recess, and the second engaging portion 122 is a circular convex rib. The shape of the circular recess matches the shape of the circular convex rib so that the circular recess and the circular convex rib can be mutually engaged. When the circular recess and the circular convex rib are engaged, the peripheral portion 121 is restricted at a particular position and will not be moved to the interior of the housing 110, so that a gap is formed between the peripheral portion 121 and the housing 110 for receiving the switch 140. Thus, when no force is applied on the nib structure 130, the peripheral portion 121 will not press the switch 140.

As indicated in FIGS. 4 to 5, the nib structure 130 and the base 120 can be integrally formed in one piece, and preferably are formed by different materials. For example, if the base 120 is made from an elastic material, then the nib structure 130 is preferably made from a hard and transparent material, so that when a force is applied on the nib structure 130, the peripheral portion 121 will be deformed for activating the switch 140 within the deformable range.

As indicated in FIG. 4, along the direction parallel to the light-receiving path L1, the first engaging portion 111 has a first width W1, the second engaging portion 122 has a second width W2. The first width W1 is larger than the second width W2, so that the base 120 Is allowed to move relative to the housing 110 along the direction parallel to the light-receiving path L1.

Again, referring to FIG. 4. The light sensor 150 is disposed in the housing 110 for receiving a light transmitted along the light-receiving path L1 into the housing 110. The light-receiving path L1 is extended through the first through hole 123. Thus, the light signal, which denotes the projection screen position and is emitted by the projector, successfully passes through the first through hole 123 so as to be transmitted to the light sensor 150 for correctly calculating the position pressed by the nib structure 130.

Referring to FIG. 3, the arc-shaped circuit board 160 is a U-shaped structure, and the light-receiving path L1 of the light sensor 150 passes through the central opening 161 of the arc-shaped circuit board 160, so that the light signal can pass through the arc-shaped circuit board 160 along the light-receiving path L1 and will not be shielded.

Besides, the light sensor 150 includes a light receiving lens 151 and a sensor IC 152. The light receiving lens 151 is disposed In the housing 110, and the sensor IC 152 Is disposed at the back of the light receiving lens 151. The tip 133 of the nib structure 130 Is substantially located at the vicinity of the focal point of the light receiving lens 161, so that the light signal around the tip 133 is focused on the sensor IC 152. Thus, the sensor IC 152 receives the light signal from the tip 133 of the nib structure 130 and its vicinity through the light receiving lens 151 for precisely measuring the position pointed by the tip 133 of the nib structure 130 on the projection screen.

As indicated in FIG. 1 and FIG 5, the nib structure 130 has two pierced holes 131 and 132. However, In the present embodiment of the invention, the nib structure 130 is made from a transparent material, so that no matter whether the nib structure 130 has a pierced hole 131 corresponding to the first through hole 123, or the pierced hole 131 is smaller than the first through hole 123, the light-receiving path L1 can successfully pass through the nib structure 130, and the light signal strength will not be substantially reduced by the transparent nib structure 130.

The nib structure 130 includes a circular stand 134 and a V-shaped stand 135. The circular stand 134 is disposed on the base 120. The V-shaped stand 135 is disposed on the circular stand 134 and between two pierced holes 131 and 132.

As indicated in FIG 1, along the direction parallel to the light-receiving path L1, the circular stand 134 has a first length D1, and the nib structure 130 has a second length D2. The first length D1 Is around 40-60% of the second length D2. That is, the pierced holes 131 and 132 at least extends 60-40% of the length of the nib structure 130 for allowing the majority of the light signals to be preferably directly transmitted to the light sensor 150 without going through the transparent nib structure 130 (illustrated in FIG. 3).

Referring to FIG. 4, the circular stand 134 is substantially slanted to a normal plane along the light-receiving path L1 in the Z-axial positive direction. When the user holds the light pen 100, the light pen 100 Is normally slanted towards the projection screen, and the design of the circular stand 134 being slanted allows the plaiced hole 131 to face the Z-axial positive direction In which the majority of the light can be successfully received.

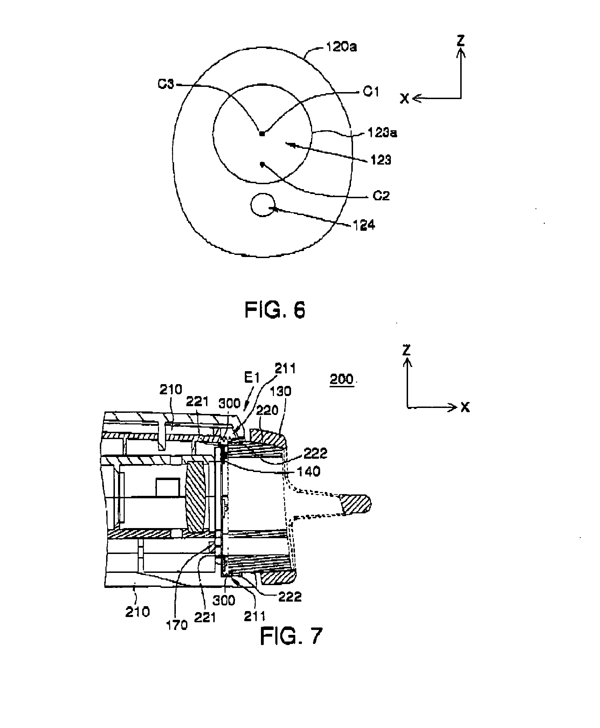

Referring to FIG. 6, a cross-sectional view of the light pen 100 of FIG 4 along a cross-sectional line 6-6' is shown. Along the plane perpendicular to the light-receiving path L1, the cross-section 120a of the base 120 is substantially elliptical, and the cross-section 123a of the first through hole 123 Is substantially circular. Furthermore, the elliptical cross-section 120a of the base 120 has two ellipse eccentricities C1 and C2 along the light-receiving path L1, and the circular cross-section 123a of the first through hole 123 has a center C3 along the light-receiving path L1, wherein the center C3 is substantially located at the ellipse eccentricity C1 closer to the Z-axial positive direction. That is, the first through hole 123 is closer to the Z-axial positive direction, and normally the user holds the light pen 100 in the manner that the light pen 100 is slanted to the projection screen, and the design of the first through hole 123 being closer to the Z-axial positive direction makes it easier for the first through hole 123 to receive a light signal from the exterior.

As indicated in FIGS. 2 to 3, the base 120 further has a second through hole 124. The laser pointer 170 is disposed in the housing 110, and a light-emitting path L2 of the laser pointer 170 is extended through the second through hole 124. Moreover, the light-emitting path L2 of the laser pointer 170 is also extended through the plerced hole 132 of the nib structure 130 (Illustrated In FIG. 1). Thus, the laser beam emitted from the laser pointer 170 can pass through the second through hole 124 and the nib structure 130 plerced hole 132 to reach the exterlor.

Furthermore, a plurality of buttons 180 is disposed on the housing 110. The function of the button 180 is selected from one of the function group consisting of a mouse left-key function, a page-up function, a page-down function, a laser pointer switch function, a pattern erasing function and a pen color changing function. In an embodiment, one button 180 can be used to activate the infra-red emitter 190 disposed at the second end E2 of the housing 110 for transmitting a boot command or a shutdown command to a projector. Or, one button 180 can have multiple dynamic functions, and can switch between the multiple functions.

Second Embodiment

Referring to FIG, 7, a cross-sectional view of a light pen 200 according to a second embodiment of the invention is shown. The light pen 200 of the present embodiment of the invention is different from the light pen 100 of the first embodiment In that the base 220 of the light pen 200 is movably connected to the first end E1 of the housing 210, and the similarities are not repeated here.

As indicated in FIG 7, the light pen 200 further includes an elastomer 300. Let FIG. 7 be taken for example. The first engaging portion 211 has four concave channels extended along the long axis of the housing (substantially parallel to the light-receiving path L1), and the second engaging portion 222 has four convex ribs extended along the long axis of the housing. The elastomer 300 is such as a spring disposed between the second engaging portion 222 (in the shape of convex rib) and the housing 210 for pushing the base 220 away from the housing 210. When a force Is applied on the nib structure 130, the elastomer 300 is compressed by the second engaging portion 222, so the base 220 will be moved toward the housing 210 to make the switch 140 switched on. Thus, the user can hold the light pen 200 and press the nib structure 130 on the projection screen for instantly activating the light pen 200.

Through the design of the mechanisms disclosed in the above embodiments of the invention, when the user holds the light pen 100 or 200 and presses the nib structure 130 on the projection screen, the light pen 100 or 200 is instantly activated for receiving a light signal from the projector. Furthermore, the structural design of the light pens 100 and 200 is combined with various optical designs so that the light receiving lens 161 can receive the light signal passing through the tip 133 of the nib structure 130 and Its vicinity for precisely measuring the position pointed by the tip 133 of the nib structure 130 on the projection screen. Besides, the light pen 100 and 200 further integrate multiple functions of briefing, making briefing easier to the user.

While the invention has been described by way of example and in terms of a preferred embodiment, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A light pen, comprising:
a housing;
a base movably or deformably connected to the housing, the base having a peripheral portion and a first through hole substantially surrounded by the peripheral portion;
a nib structure disposed on the base;
a switch deposed between the base and the housing; and
a light sensor disposed in the housing for receiving a light signal transmitted along a light-receiving path Into the housing, the light-receiving path extended through the first through hole;
wherein when no force is applied on the nib structure, the base is away from the switch without triggering the switch;
wherein when a force is applied on the nib structure, the base is moved or deformed to contact the switch, so that the switch is triggered.

2. The light pen according to claim 1, further comprising:
a plurality of switches disposed between the base and the housing, and the plurality of switches symmetrically disposed around the light-receiving path.

3. The light pen according to claim 2, further comprising,
an arc-shaped circuit board disposed between the base and the housing, and the plurality of switches disposed on the arc-shaped circuit board.

4. The light pen according to claim 3, wherein the arc-shaped circuit board is a U-shaped structure, and the light-receiving path passes through a central opening of the arc-shaped circuit board.

5. The light pen according to claim 1, wherein the base has a second through hole, and the light pen further comprises:
a laser pointer disposed in the housing, wherein a light-emitting path of the laser pointer is extended through the second through hole.

6. The light pen according to claim 1, wherein the nib structure has a pierced hole, and the light-receiving path Is extended though the pierced hole.

7. The light pen according to claim 1, further comprising:
a light receiving lens disposed in front of the light sensor, wherein a tip of the nib structure is substantially located at a focal point of the light receiving lens, so that the light signal around the tip is focused on the light sensor.

8. The light pen according to claim 1, wherein the nib structure has two pierced holes, and the nib structure comprises:
a circular stand mounted on the base; and
a V-shaped stand disposed on the circular stand and between the two pierced holes.

9. The light pen according to claim 8, wherein along the direction parallel to the light-receiving path, the circular stand has a first length, and the nib structure has a second length, the first length Is around 40∼60% of the second length.

10. The light pen according to claim 8, wherein the circular stand is substantially slanted to a normal plane of the light-receiving path.

11. The light pen according to claim 1, wherein the housing has a first engaging portion, the base has a second engaging portion, the base is connected to the housing through the first engaging portion and the second engaging portion.

12. The light pen according to claim 11, wherein the first engaging portion is a circular recess, the second engaging portion is a circular convex rib, and the circular convex rib is engaged In the circular recess.

13. The light pen according to claim 11, wherein along the direction parallel to the light-receiving path, the first engaging portion has a first width, the second engaging portion has a second width, and the first width is larger than the second width, so that the base is allowed to move relative to the housing along the direction parallel to the light-receiving path.

14. The light pen according to claim 1, further comprising:
an elastomer disposed between the housing and the base for pushing the base away from the housing, when a force is applied on the nib structure, the elastomer is compressed so that the base is moved toward the switch.

15. The light pen according to claim 1, wherein along the direction perpendicular to the light-receiving path, the cross-section of the base is substantially elliptical, the elliptical cross-section of the base has an ellipse eccentricity, the cross-section of the first through hole is substantially circular, the circular cross-section of the first through hole has a center, and the center is substantially located at the ellipse eccentricity.
